# EUROPEAN PATENT SPECIFICATION

(11) **EP 3 868 732 B1**
(45) Date of publication and mention of the grant of the patent: **28.06.2023**
(21) Application number: 20158125.3
(22) Date of filing: 19.02.2020
(51) Int. Cl.: C04B 35/5831, C04B 35/626, C04B 35/628, C01B 21/064, C04B 35/645

(54) **COATED CUBIC BORON NITRIDE PARTICLE AND METHOD OF MANUFACTURING SAME**
BESCHICHTETE PARTIKEL AUS KUBISCHEM BORNITRID UND VERFAHREN ZU IHRER HERSTELLUNG
PARTICULE DE NITRURE DE BORE CUBIQUE REVETUE ET SON PROCÉDÉ DE FABRICATION

(43) Date of publication of application: 25.08.2021
(73) Proprietor: Adico, Gyeonggi-do (KR)
(72) Inventor: HAN, Kyoung Ryoul, Chungcheongnam-do (KR); LEE, Hyeang Sup, Chungcheongnam-do (KR); AN, Sook Young, Gyeonggi-do (KR); KIM, Sun Woog, Gyeongsangnam-do (KR); KIM, Jin Ho, Gyeongsangnam-do (KR); LEE, Young Jin, Gyeongsangnam-do (KR); JANG, Dong Bin, Namdong-gu, Incheon 21561 (KR)
(74) Representative: Von Rohr Patentanwälte Partnerschaft mbB

(56) References cited:
- EP-A1- 1 006 092
- EP-A1- 2 851 148
- JP-A- 2017 030 082
- Ho J Ryu ET AL: "Preparation of Nanocrystalline TiN CoPreparation of Nanocrystalline TiN Coated Cubic Boron Nitride Powders by a Sol-Gel Process", Science & Technology America Journal of Nanoscience and Nanotechnology, vol. 11, no. 1 1 January 2011 (2011-01-01), pages 363-367, XP055719328, DOI: 10.1166/jnn.2011.3225 Retrieved from the Internet: URL:https://www.researchgate.net/publicati on/50906089_Preparation_of_Nanocrystalline _TiN_Coated_Cubic_Boron_Nitride_Powders_by _a_Sol-Gel_Process [retrieved on 2020-07-30]

## Description

### BACKGROUND OF THE INVENTION

### 1. Field of the Invention

An aspect of the present invention relates to a cubic boron nitride particle and a method of manufacturing a cubic boron nitride particle.

### 2. Description of the Related Art

As cemented carbides are widely used as fine tool materials for processing of fine molds, single-crystal and polycrystalline diamonds have been recently studied and come to be frequently used as processing materials. However, diamond has a problem in that carbon and iron chemically react with each other when iron-based metals such as die steel are processed, thus rapidly reducing the lifespan thereof. Due to the above-described characteristic, such diamond processing material is not capable of being applied to the processing of iron-based materials, which make up 70% of structural material parts and materials. Accordingly, research has been done to develop a material that is capable of replacing the diamond processing material.

Polycrystalline cubic boron nitride (PCBN) is capable of being applied to the processing of iron-based materials, to which diamond is not capable of being applied, and has a high hardness, thus being recognized as a suitable alternative material. Accordingly, the market for tools using polycrystalline cubic boron nitride is gradually growing in size, and thus technology leading to the commercialization of PCBN is actively being studied.

PCBN is a high-hardness material produced by sintering cBN (cubic boron nitride) particles together with various ceramics. cBN is a boron nitride compound having a covalent bond between nitrogen and boron. cBN is a dimorph of hexagonal boron nitride (hBN), and is a material that is artificially synthesized so as to have a structure similar to diamond crystals. The hardness and thermal conductivity of cBN are second highest among all materials, after diamond, the oxidation temperature thereof is higher than that of diamond, and cBN does not chemically react with iron group elements.
cBN has a small self-diffusion coefficient and thus may be sintered together with a sintering aid or a binder for use. The PCBN obtained by sintering conventional cBN has a relatively weak bonding force between cBN particles and a binder when used for a cutting tool, resulting in the elimination of cBN particles or the occurrence of cracking. Accordingly, there are problems in that the lifespan of tools is reduced and in that the strength is reduced due to direct bonding between the cBN particles. Also, there are problems in that heat cracks are formed, the strength is reduced at high temperatures, and tool breakage such as chipping or flaking occurs due to high burden of heat cycles. Therefore, there is a need for research to overcome the above-described problems for the purpose of commercialization of tools using the PCBN.

### [Prior Art Document]

### [Patent Document]

Korean Patent No. 10-1492969

EP2851148A1 describes a cutting tool in PCBN comprising 60 vol% cBN and a binder phase containing TiN, TiB₂, AIN, Al₂O₃. It is obtained by coating cBN particles with an Al₂O₃ layer, and a TiN layer on top of the Al₂O₃ layer; mixing with binder particles; and HPHT sintering.

### [Non-Patent Document]

### SUMMARY OF THE INVENTION

An object of an aspect of the present invention is to provide cBN particles which are less directly bonded to each other and have increased binding force with a binder when the cBN particles are mixed with the binder to manufacture a PCBN sintered body.

An object of another aspect of the present invention is to provide a method of manufacturing cBN particles which are mixed with a binder so that fluidity is improved to realize uniform dispersion, thus increasing the lifespan of a PCBN sintered body.

An aspect of the present invention provides a cubic boron nitride particle having a coating layer formed thereon, as in claim 1. The coating layer includes a first coating layer, formed on a surface of the cubic boron nitride particle, and a second coating layer, formed on the first coating layer.

The second coating layer may be thicker than the first coating layer, and the second coating layer may be formed so as to be 2 to 10 times thicker than the first coating layer.

The first coating layer includes nitrides, borides, or boronitrides of Ti or Al, and the second coating layer includes nitrides, borides, or boronitrides including one or more elements selected from the group consisting of Ti, Si, Al, Cr, Y, Nb, V, W, Mo, and Zr.

The second coating layer may include alloy-based nitrides including one or more elements which are selected from the group consisting of Ti, Si, Al, Cr, Y, Nb, V, W, Mo, and Zr, and which are not included in the first coating layer.

Surface treatment may be performed in order to smooth the first coating layer, and the first coating layer may have a thickness of 1 to 50 nm.

The second coating layer may have a thickness of 1 to 200 nm.

Preferably, an area in which a first coating layer is formed is 50 to 100% of a surface of the cubic boron nitride particle, and an area in which a second coating layer is formed is 70 to 100% of the surface of the cubic boron nitride particle. The cubic boron nitride particle may have an average diameter of 1 to 10 µm.

A difference between a maximum value and a minimum value of a thickness of a first coating layer may be adjusted to 0 to 20 nm through surface treatment.

The first coating layer may be subjected to surface treatment according to ball-milling, high energy ball-milling, or horizontal ball-milling (planetary ball-milling). Another aspect of the present invention is a method of manufacturing a multilayer-coated cubic boron nitride particle, according to claim 5. The method includes a pretreatment step of treating a surface of the cubic boron nitride particle, a first-precursor preparation step of preparing a material including a precursor of a coating material constituting a first coating layer, a first-coating-layer forming step of forming the first coating layer using a first precursor on the surface of the cubic boron nitride particle, a coating-layer treatment step of treating a surface of the first coating layer, and a second-coating-layer forming step of forming a second coating layer on the first coating layer.

The first-coating-layer forming step may be performed at a temperature in a range of 500 to 1300°C for 1 to 2 hours.

A coating-layer treatment step may include a ball-milling process, a high-energy ball-milling process, or a horizontal ball-milling (planetary ball-milling) process.

A first-precursor preparation step and a second-precursor preparation step may be a step of preparing a precursor material of halides, oxides, alkoxides, nitrates, or acetates.

A first coating layer includes nitrides, borides, or boronitrides of Ti or Al.

A second coating layer includes nitrides, borides, or boronitrides including one or more elements which are selected from the group consisting of Ti, Si, Al, Cr, Y, Nb, V, W, Mo, and Zr.

A second-precursor preparation step may be a step of preparing a precursor including a metal other than a metal in a first-precursor preparation step.

A polycrystalline-cubic-boron-nitride sintered body may be manufactured by mixing the above-described cubic boron nitride particle and a binder with each other.

The cubic boron nitride particle and the binder may be mixed at a volume ratio of 10:1 to 2:3 to manufacture the polycrystalline-cubic-boron-nitride sintered body.

Preferably, a first coating layer formed on a surface of the cubic boron nitride particle or a second coating layer formed on the first coating layer includes a composition that is identical to a component of the binder.

Since a cBN particle according to an aspect of the present invention includes a coating layer formed on a surface thereof, the direct exposure area of the surface of the cBN particle is reduced. Accordingly, when a PCBN sintered body is formed, since the cBN particles are not directly bonded to each other, it is possible to overcome a conventional problem of reduced strength of the PCBN sintered body.

Further, the coating layer formed on the surface of the cBN particle has a reduced jagged portion on the surface thereof so that the particle shape is close to a circular shape. Accordingly, it is possible to improve the fluidity of the particles when the binder and the cBN particles are mixed, and also to manufacture a PCBN sintered body having constant strength.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a mimetic view showing a method of manufacturing a multilayer-coated cubic boron nitride particle;
FIG. 2 is an electron micrograph of the surface of the cBN particle taken after a pretreatment step; and
FIG. 3 shows photographs obtained by observing the cBN particle coated after a first-coating-layer forming step using an electron microscope (TEM).

### DESCRIPTION OF THE PREFERRED EMBODIMENTS

Prior to describing the present invention in detail below, it is to be understood that the terminology used herein is for the purpose of describing particular embodiments only, and is not intended to limit the scope of the present invention, which is limited only by the appended claims. All technical and scientific terms used herein have the same meanings as those commonly understood by one of ordinary skill in the art unless otherwise indicated.

Throughout this specification and claims, unless otherwise indicated, the term "comprise", "comprises", or "comprising" means inclusion of articles or steps or a group of articles or steps that are mentioned, and is not intended to exclude any other articles or steps or any other group of articles or steps.

Meanwhile, various embodiments of the present invention can be combined with any other embodiments unless clearly indicated to the contrary. Any feature that is particularly indicated as preferred or advantageous may be combined with any other feature and features indicated as preferred or advantageous.

In the drawings, the width, length, and thickness of components may be exaggerated for convenience. The drawings are described as a whole from the point of view of the observer, and when one component is said to be "on/under" or "over/beneath" another component, this includes not only when the component is "directly on/directly under" another component, but also when there is a third component in the middle.

An aspect of the present invention is a multilayer-coated cubic boron nitride particle. The multilayer-coated cubic boron nitride particle includes a cubic boron nitride (cBN) particle, a first coating layer, and a second coating layer.

The cBN particle may be used having an average diameter in a range of 1 to 10 µm, and preferably 1 to 5 µm. The shape of the cBN particle is not limited, but in the case of a spherical or nearly spherical shape, fluidity is favorable when the cBN particle is mixed with a binder, and a coating layer having a uniform thickness is readily formed when the coating layer is formed. When the cBN particle is not spherical, the distribution of the coating layer may not be uniform when the coating layer is directly formed on the surface of the cBN particle.

The first coating layer is a coating layer formed directly on the surface of the cBN particle, and serves to reduce the area of the exposed surface of the cBN particle when a PCBN sintered body is manufactured, thus improving the strength of the PCBN sintered body.

The degree of dispersion and thickness uniformity of the first coating layer may depend on the shape of the cBN particle. When the cBN particle is not spherical, a coating material may be unevenly adsorbed or may aggregate on the edge portion of the particle.

The first coating layer may be formed on the surface of the cBN particle to a thickness of 1 to 50 nm, and preferably 1 to 20 nm. When the thickness of the first coating layer is out of the above-described range, the jagged portion of the surface of the cBN particle may be enlarged or the degree of non-uniformity of the thickness of the first coating layer may be increased. Further, a reaction over a long period of time is required in order to form the coating layer, and a large amount of precursor or oxides of the precursor may be formed as an impurity in the coating layer, thereby reducing the force of bonding of the coating layer and the cBN particle.

The first coating layer may be processed by surface treatment in order to smooth the jagged portion of the surface thereof or to ensure the uniform thickness thereof. An embodiment of the present invention discloses a cBN particle which includes a first coating layer formed so that the jagged portion of the entire surface is reduced or the uniform thickness is ensured, thus allowing the difference between the maximum value and the minimum value of the thickness to be 20 nm or less, and preferably 10 nm or less, by including a ball-milling process after the first coating layer is formed.

The surface of the cBN particle is not smooth. The cBN particle may be subjected to impurity and surface treatments during a pretreatment step. However, after the pretreatment step, the first coating layer may be formed to a thin thickness in order to form a surface suitable for forming the first coating layer. The first coating layer may be formed to a thin thickness so as to serve as a primer layer when the second coating layer is formed thereon.

Further, the first coating layer may be further subjected to a surface treatment process that enables the second coating layer to be easily formed and also enables the surface of the cBN particle to have a high adhesion force.

The first coating layer may be formed to cover 40 to 100%, preferably 60 to 100%, and more preferably 70 to 100% of the surface of the particle in order to reduce direct bonding between the cBN particles in the manufacture of the PCBN sintered body.

The first coating layer includes nitrides, borides, or boronitrides including Ti or Al. The first coating layer may include TiN, AIN, TiAIN, a mixed layer of TiN and AIN, or AIN@TiN (a layer in which AIN is coated with TiN), and may include more preferably TiN, AIN, or TiAIN.

The second coating layer is a coating layer formed on the cBN particle on which the first coating layer is formed. The second coating layer may be formed on the first coating layer, and may include a part directly applied on a portion of the surface of the cBN on which the first coating layer is not formed. The second coating layer may be formed to cover 70 to 100%, and preferably 80 to 100%, of the surface so that the surface of the cBN particle is not exposed.

The shape of the second coating layer is not limited. However, in order to improve the fluidity and mixing properties of the coated cBN particles when the cBN particles are mixed with the binder, the coated cBN particles may be formed so as to have a shape that is close to a spherical shape. It is preferable to form the second coating layer so that the jagged portion of the surface of the second coating layer is smaller than that of the surface of the first coating layer.

The second coating layer may be formed so as to be thicker than the first coating layer in order to have a smaller jagged portion and a smooth surface compared to the surface of the first coating layer. The thickness may be in the range of 1 to 200 nm, preferably 20 to 100 nm, and more preferably 30 to 50 nm. The thickness of the second coating layer may be 2 to 10 times or 3 to 5 times larger than the thickness of the first coating layer.

When the thickness of the second coating layer is smaller than the above-described range, an area where the surface of the cBN particle is exposed may be formed, and there may be a problem in that the fluidity is reduced when the particle is mixed with the binder due to the influence of the surface state of the first coating layer. When the thickness of the second coating layer is larger than the above-described range, it may be difficult to form the coating layer, a long reaction time may be required, and the number of included CBN particles per unit volume of the PCBN sintered body may be reduced, thus reducing the hardness of the PCBN sintered body.

The thickness of the second coating layer within the above-described range may prevent exposure of the surface of the CBN particle and may be less affected by the surface shape of the first coating layer, thereby improving the fluidity when the particle is mixed with the binder.

The second coating layer may include a material that may be represented by the Chemical Formula of TiₓM_{y}N_{z}, where x may be 0 to 1 and preferably 0.4 to 1, y may be 0 to 3 and preferably 1 to 2, z may be 1 to 4, and M is any one element among Si, Al, Cr, Y, Nb, V, W, Mo, and Zr.

The second coating layer may include a material that may be represented by the Chemical Formula of TiₓM_{y}X_{z}N, where x is 0.1 to 1, y is 0 to 1, z is 0 to 1, M is any one element among Al, Cr, Nb, V, W, and Mo, and X is any one element among Si, Y, and Zr. The second coating layer may further include the element included in the first coating layer or in another coating layer formed on the second coating layer.

The second coating layer may include nitrides including one or more elements selected from the group consisting of Ti, Si, Al, Cr, Y, Nb, V, W, Mo, and Zr, and alloy-based nitrides including one or more elements selected from the group consisting of Si, Al, Cr, Y, Nb, V, W, Mo, and Zr, and Ti or Al. The second coating layer may include preferably TiN, AIN, TiAIN, a mixture of TiN and AIN, or AIN@TiN, and more preferably TiN, AIN, or TiAIN.

It is preferable that the second coating layer include a metal not included in the first coating layer. For example, when the first coating layer includes TiN, the second coating layer may include TiN, AIN, or TiAIN. Preferably, the second coating layer may include AIN or TiAIN, further including Al, which is not included in the first coating layer. When the first coating layer includes AIN, the second coating layer may include TiN, AIN, or TiAIN, and preferably TiN or TiAIN, including Ti, which is not included in the first coating layer.

In the case where the first coating layer and the second coating layer are formed of the same composition, a strong bonding force is formed between the second coating layer and the first coating layer. However, the second coating layer prevailingly grows on the portion on which the first coating layer is formed, rather than on the portion where the surface of the cBN particle is directly exposed because the first coating layer is not formed thereon. Accordingly, the second coating layer thickly grows on the area where the first coating layer is formed, and the growth of the coating layer is relatively insufficient on the area where the cBN particle is exposed. Thus, the jagged portion of the coating layer may not be reduced, or the likelihood of formation of an area where the cBN particle is exposed may be increased.

When the second coating layer further includes a metal that is not included in the first coating layer, the second coating layer may have a bonding force similar to the bonding force between the first coating layer and the binder. Accordingly, the hardness of the PCBN sintered body becomes uniform, and the phenomenon of elimination of particles is prevented, thus increasing the lifespan of the sintered body.

The second coating layer may include the same composition as the first coating layer, and may be formed using another method of forming a second coating layer. When the second coating layer is manufactured using another coating method, the bonding or conversion of precursors and the size of the formed particles may be changed. Accordingly, other properties may be exhibited, and an advantageous effect similar to that of the second coating layer including the metal not included in the first coating layer may be obtained.

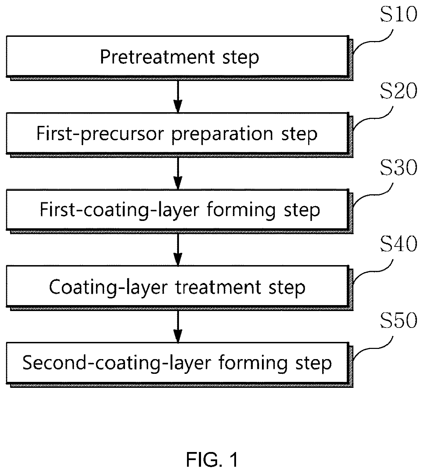

Another aspect of the present invention is a method of manufacturing a multilayer-coated cBN particle, and the manufacturing method will be described in detail below with reference to FIG. 1.

FIG. 1 is a mimetic view showing a method of forming a multilayered coating structure on the surface of a cubic boron nitride particle as another aspect of the present invention. The method of forming the multiple coating layers on the surface of the cBN particle includes a step of performing pretreatment on the cBN particle, a first-precursor preparation step, a first-coating-layer forming step, a coating-layer treatment step, and a second-coating-layer forming step.

The pretreatment step is a surface modification step of smoothing the surface of the cBN particle, removing foreign substances, and promoting coating of the surface using a precursor. The pretreatment step may be performed using one or more methods among acid treatment for treating the cBN particle with an acid solution, heat treatment, plasma surface treatment, sputtering, and a sol gel method. In the case of the cBN particle which is subjected to the pretreatment step, the surface thereof may be treated, thus facilitating bonding with a coating material and improving the bonding strength when the coating layer is formed.

The pretreatment step may include treating the cBN particle with an acid solution including sulfuric acid and nitric acid mixed with each other, agitating the mixture, washing the cBN particle, and performing drying using heat treatment.

The first-precursor preparation step is a step of preparing a solution or powder containing a precursor of a coating material for forming a coating layer on the cBN particle or on the cBN particle having a coating layer formed on the surface thereof. The first-precursor preparation step may include mixing the precursor with distilled water and performing agitation. A first precursor is a material containing a metal element included in the coating material of the first coating layer, and the type thereof is not limited, but compounds such as halides, oxides, alkoxides, nitrates, and acetates or a high-purity Ti or Al metal target may be used.

The first-coating-layer forming step is a step of forming the first coating layer after the pretreated cBN particles and the prepared precursor are mixed. The first coating layer may be directly formed in the mixed solution, and may be formed using an intermediate material by reaction after the step of forming the intermediate material on the surface of the cBN. In the first-coating-layer forming step, a sol-gel method, a thermal plasma method, a gas reaction method, or a reduction method may be used.

The first-coating-layer forming step may include a solvent removing step and a drying step, and a centrifugation method may be used. Further, the first-coating-layer forming step includes a heat treatment step, and the heat treatment step may depend on the composition of the coating layer to be formed. The heat treatment step may be performed at a temperature in the range of 500 to 1600°C under pressure in the range of 0 to 0.9 MPa, and preferably at a temperature in the range of 900 to 1200°C under pressure in the range of 0 to 0.3 MPa.

When the temperature and pressure in the first-coating-layer forming step are out of the above-described range, since a reaction for forming the coating layer is not performed, the coating layer may not be formed. Further, there are problems in that a coating layer containing an impurity having another composition may be formed due to side reactions and that some hBNs having another crystal structure may be formed due to the occurrence of the phase transition of cBN.

An embodiment of the present invention further includes a coating-layer treatment step after the first-coating-layer forming step. In the coating-layer treatment step, the first coating layer formed on the cBN particle is treated so as to modify the distribution and the surface of the first coating layer and to smoothly form the second coating layer. The coating-layer treatment step may adopt a physical or chemical method, and may include one or more methods.

The coating-layer treatment step may be performed using ball-milling, high energy ball-milling, and horizontal ball-milling (planetary ball-milling).

The coating-layer treatment step may include a fluidization step so that the aggregated particles formed in the first coating layer are fluidized to thus form a uniform coating layer.

The second-coating-layer forming step is a step of forming an additional coating layer on the cBN particle having the coating layer formed thereon, and may be performed after the coating-layer treatment step. The second-coating-layer forming step may include mixing the cBN particle having the coating layer formed thereon and a second precursor for forming the second coating layer. The second precursor is a material containing a metal element included in the second coating layer, and the type thereof is not limited, but compounds such as halides, oxides, alkoxides, nitrates, and acetates may be used. The second-coating-layer forming step for forming the second coating layer may be performed using a method that is different from the case of the first-coating-layer forming step or using the same method as in the case of the first-coating-layer forming step.

The second-coating-layer forming step may include forming a coating layer using a sol-gel method or heating the coated cBN particle under an ammonia gas condition to form a nitride coating layer. As another method for forming the second coating layer, an ALD (atomic layer deposition) method may be used. The cBN particles having the first coating layer formed thereon are added to a furnace, and the temperature thereof is raised to 400°C or higher. After TiCl₄ or AlCl₃ and ammonia gas are used as a raw material gas and fed together with Ar, (1) a process of feeding Ar and a second precursor gas, (2) a purging process using Ar gas, (3) a process of feeding Ar and ammonia gases, and (4) a purging process using Ar gas may be performed, and the cycle of (1) to (4) may be repeated to form the second coating layer.

The method of manufacturing the multilayer-coated cubic boron nitride particle may include a coating-layer treatment step so as to fluidize or divide the agglomerated structure of coating material particles formed on the surface of the cBN particle after the first coating layer is formed. Accordingly, the bonding force and strength of the first coating layer may be improved, and the first coating layer may be effectively protected when the second coating layer is formed. Further, the jagged portion of the surface of the first coating layer is reduced, so that a uniform coating layer is formed to thus improve fluidity upon mixing with the binder, and so that the second coating layer is formed smoothly and uniformly.

Also disclosed, but not claimed, is a PCBN sintered body that includes a multilayer-coated cubic boron nitride particle. The PCBN sintered body that includes the multilayer-coated cubic boron nitride particle is obtained by mixing the multilayer-coated cBN particles and a binder with each other, followed by sintering.

As a multilayer-coated cBN particle, the multilayer-coated cBN particle described in the present specification may be used, and the cBN particle may be manufactured using the above-described manufacturing method. The multilayer-coated cBN particle includes a cBN particle, a first coating layer, and a second coating layer. Since the multilayer-coated cBN particle has a multilayer coating structure including the first coating layer and the second coating layer, the surface of the cBN particle is not exposed. Accordingly, direct bonding between the cBN particles rarely occurs.

The first coating layer of the cBN particle may be agglomerated, or may be formed in a nonuniform thickness on the surface of the cBN particle. However, the first coating layer may be formed so as to have a small thickness, and may be subjected to surface treatment through the coating-layer treatment step before the second coating layer is formed so that the difference in thickness is reduced and a second coating layer having a relatively large thickness is formed. Accordingly, the fluidity of cBN particles may be increased to thus facilitate dispersion, and constant hardness may be maintained because no weak bonding portion is formed in the sintered body.

The binder is a material bonded to the surface of the cBN particles when the PCBN sintered body is manufactured using the cBN particles. The binder is positioned between the cBN particles, and a ceramic material having a high hardness may be used.

The composition of the binder used to manufacture the PCBN sintered body is not limited, but a ceramic material containing nitrides may be used. The binder that contains the material included in the first coating layer or the second coating layer may be used. When the binder and the coating layer have the same composition, the structures of the crystals may be matched at a bonding surface, thus providing bonding with high bonding force.

When the composition of the binder is included in the outermost coating layer, the outermost coating layer and the binder may be strongly bonded to each other, so that the hardness of the PCBN sintered body is improved and elimination of the cBN particles is prevented, thereby extending the lifespan of the sintered body.

When the composition of the binder is included in the first coating layer and the second coating layer in the case of the cBN particle having the second coating layer formed thereon, the ratio of the binder composition included in the second coating layer may be higher than the ratio of the binder composition included in the first coating layer. In this case, the bonding force between the second coating layer and the binder is stronger than the bonding force between the first coating layer and the binder, thereby obtaining the above-described advantageous effects.

When the coating layer includes the binder component, in the case where the ratio of the binder component is higher in the second coating layer than in the first coating layer, the binding force between the second coating layer of the cBN particle and the binder may be increased to thus prevent the elimination of the cBN particles from the binder.

The multilayer-coated cBN particle may be mixed with the binder such that the ratio of the cBN particles is 40 to 100 vol% and preferably 50 to 70 vol% for the purpose of processing of the heat-treated steel. When the ratio is out of the above-described range, there is a problem in that the lifespan and strength of the hard metal tool are reduced.

The PCBN sintered body including the multilayer-coated cubic boron nitride particles is mixed with a binder or a binder precursor. The mixing includes a method that may be generally used, such as milling and ultrasonic mixing, and the method is not particularly limited. After solvent or adsorbed material is removed by heat treatment, the multilayer-coated cBN particles and the binder may be sintered in an HPHT press at a temperature of 1400°C or higher under a pressure of 4.5 GPa or more, thus forming the PCBN sintered body.

Hereinafter, the present invention will be described in more detail with reference to Examples.

### Example

### Example 1

In the pretreatment step, 20 g of cBN powder having an average particle size of 2 µm was prepared and treated with a solution in which sulfuric acid (69.0 to 71.0%, DAEJUNG) and nitric acid (69.0 to 71.0%, DAEJUNG) were mixed with each other at a ratio of 1 : 1.

After the mixed solution was agitated for 4 hours, the cBN powder was washed four times using distilled water and further washed using ethanol. The washed cBN powder was dried at a temperature of 65°C for 2 hours to remove the distilled water and ethanol. Heat treatment was performed at a temperature of 600°C for 30 minutes, thus obtaining pretreated cBN particles.

5 g of the pretreated cBN particles were added to 600 mL of distilled water, agitated for 15 minutes, and dispersed for 1 hour using an ultrasonic cleaner. TiF₄ (titanium(IV) fluoride, Aldrich) was mixed with distilled water and then agitated for 1 hour to manufacture a 0.06M TiF₄ solution. The manufactured TiF₄ solution was mixed with a solution in which the cBN particles were dispersed, followed by agitation at a temperature of 65°C for 2 hours.

A process of precipitating the mixed solution, recovering a part of the distilled water, and performing centrifugation at 4000 RPM for 10 minutes to achieve washing and drying was repeated three times. Subsequently, heat treatment was performed in the presence of the mixed gas including 95% nitrogen gas and 5% hydrogen gas at a temperature of 1200°C for 1 hour, thus obtaining cBN particles on which a first coating layer having an average thickness of 10 nm was formed.

The cBN particles having the first coating layer formed thereon were subjected to ball milling so as to treat the surface of the formed first coating layer.

Subsequently, the cBN particles having the first coating layer formed thereon were charged into a brazier, and the temperature thereof was raised to 400°C. Under an Ar gas condition using TiCl₄ gas and ammonia gas as a second precursor, (1) a process of feeding Ar and TiCl₄ gases, (2) a purging process using Ar gas, (3) a process of feeding Ar and ammonia gases, and (4) a purging process using Ar gas were repeated until the thickness of the second coating layer became 30 nm.

### Example 2

The first precursor and the second precursor of Example 1 were mixed at the same mixing ratio to form a first coating layer, and a second coating layer having a thickness of 40 nm was formed according to the same method as in Example 1 using TiF₄ and AlCl₃ as the second precursor after the ball-milling treatment.

### Example 3

The first precursor and the second precursor of Example 1 were mixed at the same mixing ratio to form a first coating layer, and TiF₄ and AlCl₃ were prepared as the second precursor after the ball-milling treatment of the first coating layer to form a second coating layer having a thickness of 50 nm.

### Example 4

The first precursor and the second precursor of Example 1 were mixed at the same mixing ratio to form a first coating layer, and TiF₄ was prepared as the second precursor without performing the ball-milling treatment step of the first coating layer to form a second coating layer having a thickness of 30 nm.

### Example 5

The first precursor and the second precursor of Example 1 were mixed at the same mixing ratio to form a first coating layer, and TiF₄ and AlCl₃ were prepared as the second precursor after the ball-milling treatment of the first coating layer to form a second coating layer having a thickness of 30 nm.

### Example 6

The first precursor and the second precursor of Example 1 were mixed at the same mixing ratio to form a first coating layer, and TiF₄ and AlCl₃ were prepared as the second precursor after the ball-milling treatment of the first coating layer to form a second coating layer having a thickness of 30 nm using a sol-gel method.

### Comparative Example

### Comparative Example 1

The cBN particles were prepared and then pretreated with acid, and the coating layer was not formed.

### Comparative Example 2

A first coating layer having a thickness of 40 nm was formed using the same method as in Example 1.

### Experimental Example

### Experimental Example 1

### (Measurement of surface of pretreated cBN particle)

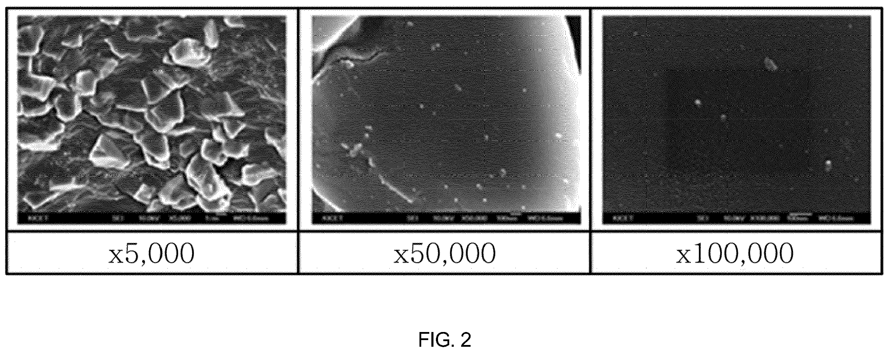

FIG. 2 is a photograph obtained by observing the surface of the pretreated cBN particle using an electron microscope. It was confirmed that a lot of fine powder adsorbed on the surface of the cBN particles was removed, and it was observed that the surface thereof was thinly and evenly etched through surface modification treatment using an acid solution.

### Experimental Example 2

### (Observation of the surface of the cBN particle having the first coating layer formed thereon)

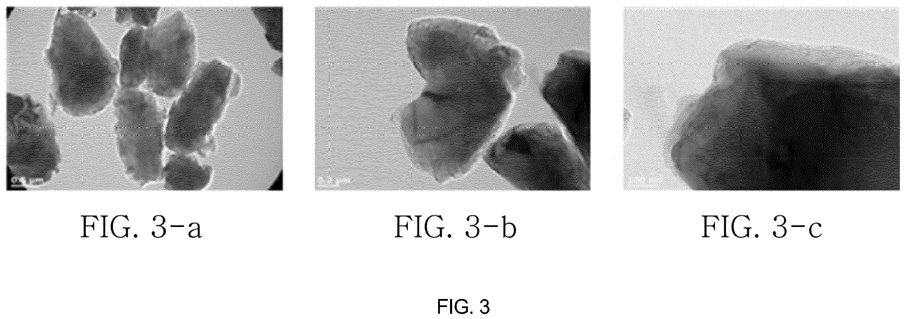

FIG. 3 shows photographs obtained by photographing the cBN particle, on which the first coating layer is formed in Example 1, using an electron microscope (TEM). A 10 nm thick first coating layer is observed on the surface of the cBN particles. In FIGS. 3-a, 3-b, and 3-c, the aggregation structures of the coating particles were observed at the corners of the cBN particle.

### Experimental Example 3

### (Measurement of composition, thickness, and fluidity of the formed coating layer)

The cubic boron nitride particles according to Examples 1 to 3, in which the second coating layer was formed, and Comparative Example 2, in which the first coating layer was formed, were mixed with a binder, followed by sintering to thus manufacture a PCBN tool. Then, the following experiment was performed, and the result is shown in Table 2.

The experiment was based on the bit tool lifespan test of the test standard KS B ISO 2685. A machining apparatus (Doosan PUMA GT2100B) and a digital microscope (Keyence VHX-5000) were used as test equipment, and STD11 was used as a machining specimen.

A predetermined length of an insert tool, which is a test target product, was subjected to turning operations. Thereafter, the wear amount of the margin surface of the insert was measured using a digital microscope. The time point at which the wear amount was more than 0.3 mm was judged to be the end point of the tool lifespan.

Five tests were carried out for each tool, and the machining time and machining distance were recorded at the end of the tool lifespan.

The results of measuring the composition, thickness, and fluidity of the first coating layers and the second coating layers of Examples 1 to 6 and Comparative Examples 1 and 2 are shown in Table 1 below.

The results of experiments on the CBN content and tool lifespan of Examples 1 to 3 and Comparative Example 1 are shown in Table 2 below.

**[Table 1]**

| | First coating layer | | | Second coating layer | | | | Fluidity |
|---|---|---|---|---|---|---|---|---|
| | Thickness (nm) | TiN (vol%) | AlN (vol%) | Thickness (nm) | TiN (vol%) | AlN (vol%) | TiAIN (vol%) | |
| Example 1 | 10 | 20 or more | 0 | 30 | 20 or more | 0 | | 80 |
| Example 2 | 10 | 20 or more | 20 or more | 40 | 20 or more | 20 or more | | 83 |
| Example 3 | 10 | 30 or more | 30 or more | 50 | 30 or more | 30 or more | | 87 |
| Example 4 | 10 | 20 or more | 0 | 30 | 20 or more | 0 | | 75 |
| Example 5 | 10 | 20 or more | 0 | 30 | 20 or more | 20 or more | | 86 |
| Example 6 | 10 | 20 or more | 0 | 30 | 20 or more | 20 or more | 10 or more | 90 |
| Comparative Example 1 | 0 | 0 | 0 | 0 | 0 | 0 | | 60 |
| Comparative Example 2 | 40 | 30 or more | 30 | 0 | 0 | 0 | | 70 |

**[Table 2]**

| Experimental target | Content of cBN (vol%) | Lifespan of tool (m) | | | | | Average lifespan (m) |
|---|---|---|---|---|---|---|---|
| | | 1st | 2nd | 3rd | 4th | 5th | |
| Example 1 | 40 vol.%TiAIN-CBN | 8,741 | 4,712 | 5,551 | 6,164 | 2,878 | 5609.2 |
| Example 2 | 40 vol.%TiN-CBN | 7,219 | 13,780 | 7,213 | 12,821 | 12,799 | 10766.4 |
| Example 3 | 60 vol.%TiAIN-CBN | 5,350 | 5,555 | 13,896 | 9,921 | 17,096 | 10363.6 |
| Comparative Example 1 | 40 vol.%TiN-CBN | 3,678 | 2,376 | 2,316 | 2,256 | 3,270 | 2779.2 |

The features, structures, and effects illustrated in the above-described embodiments may be combined or modified with respect to other embodiments as described is the appended claims which define the scope of the invention.

### [Description of the Reference Numerals]

- S10:: Pretreatment step
- S20:: First-precursor preparation step
- S30:: First-coating-layer forming step
- S40:: Coating-layer treatment step
- S50:: Second-coating-layer forming step

## Claims

1. A cubic boron nitride particle having a coating layer formed thereon, the coating layer comprising:
a first coating layer including nitrides, borides, or boronitrides of Ti or Al and
formed on a surface of the cubic boron nitride particle; and
a second coating layer including nitrides, borides, or boronitrides including one or more elements selected from the group consisting of Ti, Si, Al, Cr, Y, Nb, V, W, Mo, and Zr formed on the first coating layer.

2. The cubic boron nitride particle of claim 1, wherein the second coating layer is thicker than the first coating layer.

3. The cubic boron nitride particle of claim 2, wherein the second coating layer is formed so as to be 3 to 5 times thicker than the first coating layer.

4. The cubic boron nitride particle of claim 1 or 2, wherein the second coating layer includes alloy-based nitrides, borides, or boronitrides including one or more elements which are selected from the group consisting of Ti, Si, Al, Cr, Y, Nb, V, W, Mo, and Zr, and which are not included in the first coating layer.

5. A method of manufacturing a multilayer-coated cubic boron nitride particle, the method comprising:
a pretreatment step of treating a surface of the cubic boron nitride particle;
a first-precursor preparation step of preparing a material including a precursor of a coating material constituting a first coating layer, which includes nitrides, borides, or boronitrides of Ti or Al;
a first-coating-layer forming step of forming the first coating layer using a first precursor on the surface of the cubic boron nitride particle;
a coating-layer treatment step of treating a surface of the first coating layer; and
a second-coating-layer forming step of forming a second coating layer on the first coating layer, wherein the second coating layer includes nitrides, borides, or boronitrides including one or more element selected from the group consisting of Ti, Si, Al, Cr, Y, Nb, V, W, Mo, and Zr.

6. The method of claim 5, wherein the second coating layer includes alloy-based nitrides, borides, or boronitrides including one or more elements which are selected from the group consisting of Ti, Si, Al, Cr, Y, Nb, V, W, Mo, and Zr and are not included in the first coating layer.

7. The method of claim 6, wherein a second-precursor preparation step is a step of preparing a precursor including a metal other than a metal in a first-precursor preparation step

## Patentansprüche

1. Kubisches Bornitridpartikel mit einer darauf gebildeten Überzugsschicht, wobei die Überzugsschicht Folgendes umfasst:
eine erste Überzugsschicht, die Nitride, Boride oder Bornitride von Ti oder AI enthält und auf einer Oberfläche des Partikels aus kubischem Bornitrid gebildet ist; und
eine zweite Überzugsschicht die Nitride, Boride oder Bornitride mit einem oder mehreren Elementen aus der Gruppe Ti, Si, Al, Cr, Y, Nb, V, W, Mo und Zr enthält und die auf der ersten Überzugsschicht ausgebildet ist.

2. Kubisches Bornitridpartikel nach Anspruch 1, wobei die zweite Überzugsschicht dicker ist als die erste Überzugsschicht.

3. Kubisches Bornitridpartikel nach Anspruch 2, wobei die zweite Überzugsschicht so ausgebildet ist, dass sie 3- bis 5-mal dicker ist als die erste Überzugsschicht.

4. Kubisches Bornitridpartikel nach Anspruch 1 oder 2, wobei die zweite Überzugsschicht Nitride, Boride oder Bornitride auf Legierungsbasis enthält, die ein oder mehrere Elemente umfassen, die aus der Gruppe ausgewählt sind, die aus Ti, Si, Al, Cr, Y, Nb, V, W, Mo und Zr besteht, und die nicht in der ersten Überzugsschicht enthalten sind.

5. Verfahren zur Herstellung eines mehrschichtig beschichteten kubischen Bornitridpartikels, wobei das Verfahren umfasst:
einen Vorbehandlungsschritt des Behandelns einer Oberfläche des kubischen Bornitridpartikels;
einen Vorbereitungsschritt des Vorbereitens eines Materials, das einen Vorläufer eines Beschichtungsmaterials enthält, das eine erste Überzugsschicht bildet, die Nitride, Boride oder Bornitride von Ti oder AI enthält;
einen Herstellungsschritt des Bildens einer ersten Überzugsschicht unter Verwendung eines ersten Vorläufers auf der Oberfläche des kubischen Bornitridpartikels gebildet wird;
einen Behandlungsschritt des Behandelns einer Oberfläche der ersten Beschichtungsschicht; und
einen Herstellungsschritt des Bildens einer zweiten Überzugsschicht auf der ersten Überzugsschicht, wobei die zweite Überzugsschicht Nitride, Boride oder Bornitride enthält, die ein oder mehrere Elemente umfassen, die aus der Gruppe ausgewählt sind, die aus Ti, Si, Al, Cr, Y, Nb, V, W, Mo und Zr besteht.

6. Verfahren nach Anspruch 5, wobei die zweite Überzugsschicht Nitride, Boride oder Bornitride auf Legierungsbasis enthält, die ein oder mehrere Elemente umfassen, die aus der Gruppe ausgewählt sind, die aus Ti, Si, Al, Cr, Y, Nb, V, W, Mo und Zr besteht, und nicht in der ersten Überzugsschicht enthalten sind.

7. Verfahren nach Anspruch 6, wobei ein Vorbereitungsschritt des Vorbereitens eines zweiten Vorläufers, der ein anderes Metall als ein Metall in einem Vorbereitungsschritt des Vorbereitens eines ersten Vorläufers enthält, vorgesehen ist.

## Revendications

1. Particule cubique de nitrure de bore sur laquelle est formée une couche de revêtement, la couche de revêtement comprenant:
une première couche de revêtement comprenant des nitrures, des borures ou des boronitrures de Ti ou d'AI et formée sur une surface de la particule cubique de nitrure de bore ; et
une deuxième couche de revêtement comprenant des nitrures, des borures ou des boronitrures comprenant un ou plusieurs éléments choisis dans le groupe constitué par Ti, Si, AI, Cr, Y, Nb, V, W, Mo et Zr et formée sur la première couche de revêtement.

2. Particule cubique de nitrure de bore de la revendication 1, dans laquelle la seconde couche de revêtement est plus épaisse que la première couche de revêtement.

3. Particule cubique de nitrure de bore de la revendication 2, dans laquelle la seconde couche de revêtement est formée de manière à être 3 à 5 fois plus épaisse que la première couche de revêtement.

4. Particule cubique de nitrure de bore de la revendication 1 ou 2, dans laquelle la deuxième couche de revêtement comprend des nitrures, borures ou boronitrures à base d'alliages comprenant un ou plusieurs éléments choisis dans le groupe constitué de Ti, Si, AI, Cr, Y, Nb, V, W, Mo et Zr, et qui ne sont pas inclus dans la première couche de revêtement.

5. Procédé de fabrication d'une particule de nitrure de bore cubique à revêtement multicouche, comprenant:
une étape de prétraitement consistant à traiter une surface de la particule cubique de nitrure de bore;
une étape de préparation du premier précurseur consistant à préparer un matériau comprenant un précurseur d'un matériau de revêtement constituant une première couche de revêtement, qui comprend des nitrures, des borures ou des boronitrures de Ti ou d'AI;
une étape de formation de la première couche de revêtement consistant à former la première couche de revêtement à l'aide d'un premier précurseur sur la surface de la particule cubique de nitrure de bore;
une étape de traitement de la couche de revêtement consistant à traiter une surface de la première couche de revêtement ; et
une étape de formation de la deuxième couche de revêtement consistant à former une deuxième couche de revêtement sur la première couche de revêtement, dans laquelle la deuxième couche de revêtement comprend des nitrures, des biorédes ou des boronitrures comprenant un ou plusieurs éléments choisis dans le groupe constitué par Ti, Si, AI, Cr, Y, Nb, V, W, Mo, et Zr.

6. Procédé de la revendication 5, dans lequel la seconde couche de revêtement comprend des nitrures, borures ou boronitrures à base d'alliage comprenant un ou plusieurs éléments choisis dans le groupe constitué de Ti, Si, AI, Cr, Y, Nb, V, W, Mo et Zr et qui ne sont pas inclus dans la première couche de revêtement.

7. Procédé selon la revendication 6, dans lequel une étape de préparation du deuxième précurseur est une étape de préparation d'un précurseur comprenant un métal autre qu'un métal dans une première étape de préparation du précurseur.
